# EUROPEAN PATENT APPLICATION

(11) **EP 1 519 165 A2**
(43) Date of publication of application: **30.03.2005**
(21) Application number: 04022646.6
(22) Date of filing: 23.09.2004
(51) Int. Cl.: G01H 11/08

(54) **Piezoelectric vibration sensor**

(30) Priority: 29.09.2003 JP 2003338043
(71) Applicant: Hosiden Corporation, Yao-shi, Osaka 581-0071 (JP)
(72) Inventor: Ohbayashi, Yoshiaki, Nara-shi Nara 631-0045 (JP); Yasuda, Mamoru, Kobe-shi Hyogo 651-2225 (JP); Sugimori, Yasuo, Nabari-shi Mie 518-0719 (JP)
(74) Representative: Hoffmann, Eckart, Dipl.-Ing.

(57) **Abstract**

A vibration membrane is formed by a laminate consisting of a piezoelectric film on both surfaces of which electrode coats are formed respectively and a soft sheet on both surfaces of which metal coats are formed respectively, and a weight is mounted on one of the surfaces of the vibration membrane. A pair of frame-like elements is provided to support the peripheral portion of the vibration membrane on each side by one frame-like element. The peripheral portion of the vibration membrane is supported by the pair of frame-like elements by accommodating the vibration membrane and the frame-like elements in a casing one end of which is open and closing the open end of the casing by a board.

## Description

### BACKGROUND OF THE INVENTION

### 1. Field of the Invention

The present invention relates to a piezoelectric vibration sensor that uses a piezoelectric element or device (piezoelectric material), and to such piezoelectric vibration sensor that can be suitably used in measuring a vibration of each of various equipments or apparatuses such as electric, electronic, instrumental, medical, scientific, mechanical or the like, and in a pedometer or the like.

### 2. Description of the Related Art

In case of measuring a vibration, in general, there are used a method of measuring acceleration, a method of measuring velocity, and a method of measuring displacement. The present invention belongs to a technical field in which measurement of a vibration is carried out by measuring acceleration, and particularly, relates to a piezoelectric vibration sensor that uses a piezoelectric element or device (piezoelectric material) as an element or device for measuring acceleration.

A piezoelectric vibration sensor (acceleration sensor) that uses a piezoelectric element or device (piezoelectric material) as an element for measuring acceleration is disclosed in, for example, Japanese Unexamined Patent Application Publication No. 2000-213954 (P2000-213954A) that was published on August 4, 2000. An acceleration sensor disclosed in the above-mentioned Japanese Unexamined Patent Application Publication No. 2000-213954 will be described briefly with reference to Fig. 4.

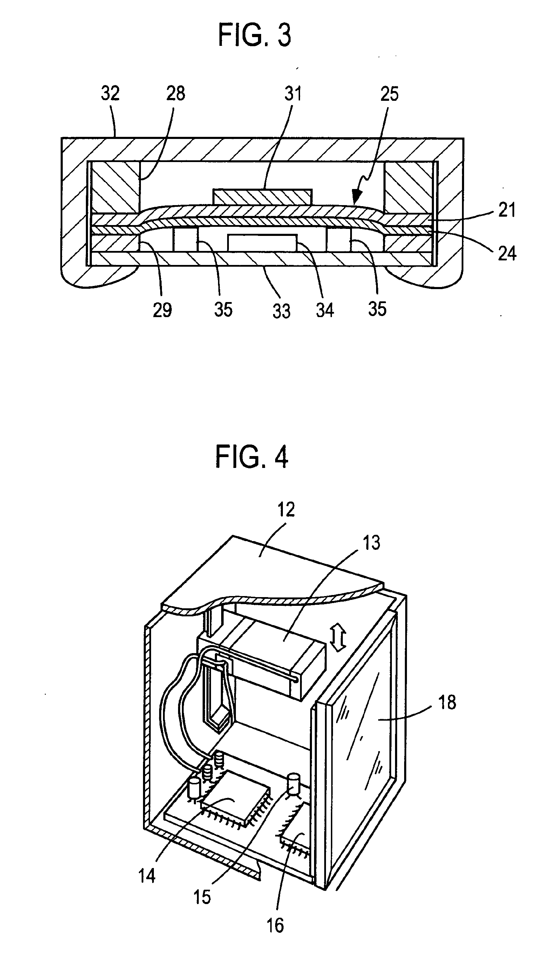

The acceleration sensor disclosed in the Japanese Unexamined Patent Application Publication No. 2000-213954 is one that uses a piezoelectric sensor to measure the number of steps or to count a person's paces, and, as shown in Fig. 4, has a piezoelectric sensor 13 for detecting the number of steps, an operational amplifier 14 for amplifying a signal and a transistor all of which are built in a box-like casing 12. An output voltage from the piezoelectric sensor 13 is amplified by the operational amplifier 14 and the transistor 15, and then is given to an arithmetic unit or processor 16 in which the amplified voltage is electrically processed. The result of operation is supplied to a liquid crystal panel 18 mounted on one sidewall of the casing 12 to display it on the panel 18.

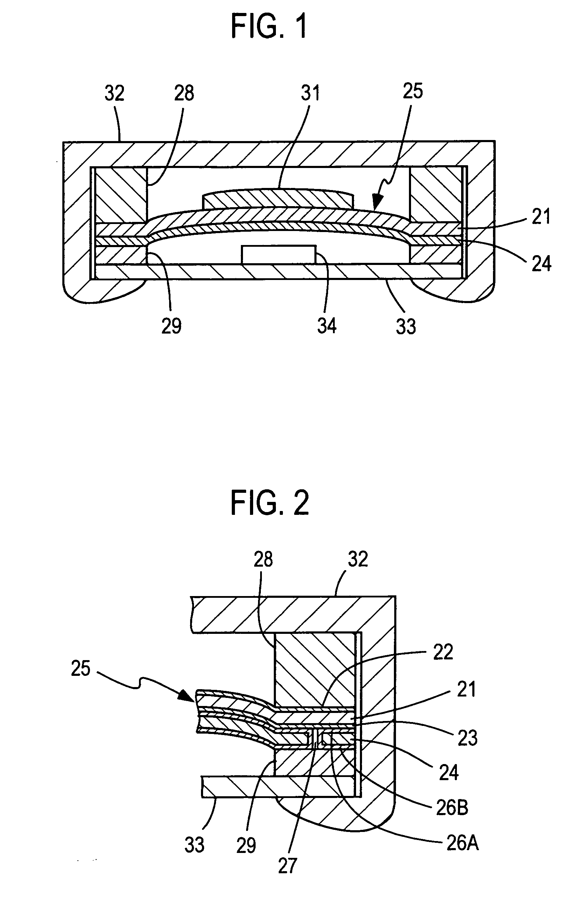

The piezoelectric sensor 13 has its structure, as shown in Figs. 2 and 3 of the Japanese Unexamined Patent Application Publication No. 2000-213954, in which exterior substrates, each having a predetermined weight, are pasted by an adhesive on the top and bottom surfaces of the piezoelectric sensor 13 of a flat board-like shape having a plurality of sensitive surfaces, respectively, so that they are united in one body. The piezoelectric sensor 13 is supported to be movable in an up-and-down or vertical direction in the casing 12, and is constructed such that it comes into collision with the inner surface of the ceiling of the casing 12 once by an up-and-down acceleration due to each step in walking. The piezoelectric sensor 13 undergoes a distortion by its collision with the inner surface of the ceiling thereby to generate a voltage. Accordingly, a collision of the piezoelectric sensor 13 with the inner surface of the ceiling can be detected by detection of an output voltage from the piezoelectric sensor 13. In the acceleration sensor shown in Fig. 4, the number of collisions is displayed as the number of steps.

Though the Japanese Unexamined Patent Application Publication No. 2000-213954 does not state clearly, a piezoelectric ceramic is generally used in a piezoelectric sensor having its structure that it is movable in an up-and-down or vertical direction due to an acceleration input as discussed above. However, piezoelectric ceramics are weak in a shock or impact such as falling or the like, and a break, a crack, a fracture or the like is easy to occur therein by a shock. If a break, a crack, a fracture or the like should occur in a piezoelectric ceramic, no voltage is generated from the piezoelectric sensor, and hence any output signal is not generated from a piezoelectric vibration sensor using this piezoelectric sensor so that the vibration sensor is impossible to use.

### SUMMARY OF THE INVENTION

An object of the present invention is to provide a piezoelectric vibration sensor that has high resistant to a shock, impact or the like.

Another object of the present invention is to provide a piezoelectric vibration sensor that is capable of stably measuring a vibration with high precision.

In order to accomplish the foregoing objects, in an aspect of the present invention, there is provided a piezoelectric vibration sensor which comprises: a vibration membrane that consists of a laminate constituted by a soft sheet and a piezoelectric film on both surfaces of which electrode coats are formed; a frame-like element that supports the peripheral portion of the vibration membrane; and a weight that is mounted on about the central portion of one surface of the portion of the vibration membrane that is not supported by the frame-like element, and wherein the vibration membrane is formed such that the portion thereof which is not supported by the frame-like element is displaced from the peripheral portion thereof.

In a preferred embodiment, electric conductor coats are formed on both surfaces of the soft sheet, respectively; the portion of the vibration membrane that is not supported by the frame-like element is formed in about a dome-like shape; and a pair of frame-like elements are provided to support the peripheral portion of the vibration membrane on each side by one frame-like element.

In addition, the aforesaid piezoelectric vibration sensor further includes: a casing one end of which is open; and a board that closes the open end of the casing, and is constructed such that the peripheral portion of the vibration membrane is supported by the frame-like element or elements by accommodating in the casing the frame-like element or elements and the vibration membrane on which the weight has been mounted and closing the open end of the casing by the board.

In another aspect of the present invention, there is provided a piezoelectric vibration sensor which comprises: a vibration membrane that consists of a laminate constituted by a soft sheet and a piezoelectric film on both surfaces of which electrode coats are formed; a frame-like element that supports the peripheral portion of the vibration membrane; a weight that is mounted on about the central portion of one surface of the portion of the vibration membrane that is not supported by the frame-like element; a casing one end of which is open; a board that closes the open end of the casing; and a plurality of pins that are formed on and protrude from the inner surface of the board, and wherein the peripheral portion of the vibration membrane is supported by the frame-like element by accommodating in the casing the frame-like element and the vibration membrane on which the weight has been mounted and closing the open end of the casing by the board as well as the portion of the vibration membrane that is not supported by the frame-like element is pressed by the plurality of pins on the inner surface of the board so that it is displaced from the peripheral portion thereof and supported in the displaced shape.

In a preferred embodiment, electric conductor coats are formed on both surfaces of the soft sheet, respectively; the portion of the vibration membrane that is not supported by the frame-like element is formed in about a dome-like shape; and a pair of frame-like elements are provided to support the peripheral portion of the vibration membrane on each side by one frame-like element.

In accordance with the present invention, as a vibration measurement element or device, a piezoelectric film that is much strong in a shock or impact such as falling or the like is used, and hence there can be provided a piezoelectric vibration sensor that has high resistant to a shock, impact or the like. In addition, since the peripheral portion of the vibration membrane is supported, when a vibration or impulse is applied to the sensor, the vibration membrane vibrates in one direction much stably with large amplitude of vibration. Accordingly, a stable and large output voltage can be obtained therefrom, and hence an acceleration (vibration) applied to the sensor can be measured stably with high accuracy.

### BRIEF DESCRIPTION OF THE DRAWINGS

Fig. 1 is a sectional view showing a first embodiment of the piezoelectric vibration sensor according to the present invention.
Fig. 2 is an enlarged sectional view of a portion in Fig. 1.
Fig. 3 is a sectional view showing a second embodiment of the piezoelectric vibration sensor according to the present invention.
Fig. 4 is a perspective view showing an example of the prior piezoelectric vibration sensor a portion of which is cut off.

### DETAILED DESCRIPTION OF THE PREFERRED EMBODIMENTS

The preferred embodiments of the present invention will now be described in detail with reference to Figs. 1 to 3. The present invention may, however, be embodied in many different forms and should not be construed as limited to the embodiments set forth hereinafter; rather, the embodiments are provided so that this disclosure will be thorough and complete, and will fully convey the scope of the invention to those skilled in the art.

First, a first embodiment of the present invention will be described in detail with reference to Figs. 1 and 2.

Fig. 1 is a sectional view showing a first embodiment of the piezoelectric vibration sensor according to the present invention. This piezoelectric vibration sensor comprises: a vibration membrane 25 that is constituted by a piezoelectric film 21 and a soft sheet 24 integrated with the piezoelectric film 21 in one body; a pair of frame-like elements 28 and 29 that nip or put the peripheral or edge portion of the vibration membrane 25 between them and support the membrane 25; and a sheet-like weight 31 that is mounted on the central portion of the piezoelectric film 21 of the vibration membrane 25.

The piezoelectric film 21 is a film having a generally circular shape in plan which is made of PVDF (polyvinylidene fluoride) in this embodiment, and as shown in enlarged scale in Fig. 2, electrode coats 22 and 23 are formed on the both surfaces of the piezoelectric film 21 over the entire surfaces thereof, respectively. These electrode coats 22 and 23 can be formed by vapor deposition of, for example, nickel (Ni) or Titanium (Ti) on the both surfaces of the piezoelectric film 21.

The soft sheet 24 is used to support the piezoelectric film 21, and so has substantially the same shape in plan as that of the piezoelectric film 21. The soft sheet 24 is made of, for example, polyurethane, elastomer or the like. In this example, as shown in enlarged scale in Fig. 2, metal coats 26A and 26B are formed on the both surfaces of the soft sheet 24 of a generally circular shape in plan over the entire surfaces thereof, respectively. These metal coats 26A and 26B can be formed by vapor deposition of, for example, nickel (Ni) or Titanium (Ti) on the both surfaces of the soft sheet 24.

One of the surfaces (the surface of the metal coat 26A, in this embodiment) of the soft sheet 24 of a generally circular shape in plan on both surfaces of which the metal coats 26A and 26B have been formed and one of the surfaces (the surface of the electrode coat 23, in this embodiment) of the piezoelectric film 21 of a generally circular shape in plan on both surfaces of which the electrode coats 22 and 23 have been formed, are joined together with, for example, a suitable electrically conductive adhesive to form one body so that the vibration membrane 25 consisting of a laminate constituted by the soft sheet 24 and the piezoelectric film 21 is formed.

Each of the pair of frame-like elements 28 and 29 is formed so as to have a ring-like shape in this embodiment because the vibration membrane 25 has a generally circular shape in plan, and one ring-shaped frame-like element 28 (the upper side frame-like element in the figure) is higher in its height than the other ring-shaped frame-like element 29 (the lower side frame-like element in the figure). These ring-shaped frame-like elements 28 and 29 are metal rings that are made of a metal such as, for example, brass, and the vibration membrane 25 is nipped by the bottom surface of the upper ring-shaped frame-like element 28 and the top surface of the lower ring-shaped frame-like element 29 and supported therebetween. As a result, the bottom surface of the upper ring-shaped frame-like element 28 and the surface of the upper side electrode coat 22 of the piezoelectric film 21 are electrically in contact with each other as well as the top surface of the lower ring-shaped frame-like element 29 and the surface of the lower side metal coat 26B of the soft sheet 24 are electrically in contact with each other.

The metal coats 26A and 26B on the both surfaces of the soft sheet 24 are electrically connected with each other via through holes 27 that are formed in the peripheral portion of the soft sheet 24 as shown in Fig. 2, and as stated above, the piezoelectric film 21 and the soft sheet 24 are joined together with an electrically conductive adhesive to be unified in one body. Accordingly, the lower side electrode coat 23 of the piezoelectric film 21 and the upper side metal coat 26A of the soft sheet 24 are electrically connected with each other. As a result, the lower side electrode coat 23 of the piezoelectric film 21 is electrically connected with the lower side ring-shaped frame-like element 29 through the upper side metal coat 26A of the soft sheet 24, electric conductors in the through holes 27, and the lower side metal coat 26B of the soft sheet 24 in that order.

The vibration membrane 25 comprises: the above-mentioned peripheral portion that is nipped by the pair of ring-shaped frame-like elements 28 and 29; and an inside portion toward the center of the membrane 25 from the peripheral portion (a portion of the membrane 25 which can vibrate or a portion of the membrane 25 which is not nipped by the frame-like elements 28 and 29), and this inside portion is shaped into a dome shape, in this embodiment. That is, the vibration membrane 25 comprises: the flat peripheral portion having a ring-like shape and the central portion having a dome shape. A sheet-like weight 31 is mounted on the central portion of the top surface of the dome-shaped portion by use of, for example, an adhesive in such manner that the weight 31 is closely adhered thereto. The weight 31 is formed by use of, for example, stainless steel, brass or the like, and has a generally circular shape in plan in this embodiment.

The vibration membrane 25 to which the weight 31 has been mounted, and the pair of ring-shaped frame-like elements 28 and 29 that nip the peripheral portion of the vibration membrane 25 therebetween are accommodated into a cylindrical casing 32 the bottom of which is open. The casing 32 is made of a metal such as, for example, aluminium or the like. At first, the one ring-shaped frame-like element 28 is inserted into the casing 32, and thereafter, the vibration membrane 25 to which the weight 31 has been mounted, and the other ring-shaped frame-like element 29 are inserted into the casing 32 in order, and at last, a disc-shaped board 33 is inserted into the casing 32, thereby to close the open end (bottom) of the casing 32. Next, the open end of the casing 32 are bent inwardly, pressed down and clinched on the disc-shaped board 33 so that the board 33 is secured to the casing 32. As a result, the peripheral portion of the vibration membrane 25 is strongly nipped and supported by the bottom surface of the upper side ring-shaped frame-like element 28 and the top surface of the lower side ring-shaped frame-like element 29, and the vibration membrane 25 is supported in the casing 32 in such state as shown in Fig. 1. Further, on the inner surface of the board 33 are mounted at least one FET (field effect transistor) 34 and required circuit elements and/or parts not shown, and in addition thereto, a required electrode pattern (not shown) is formed on each of the inner surface and the outer surface of the board 33.

The electrode pattern formed on the inner surface of the board 33 is electrically connected to the bottom surface of the lower side ring-shaped frame-like element 29, and the electrode pattern formed on the outer surface of the board 33 is electrically connected to the clinched portion of the casing 32. Accordingly, the lower side electrode coat 23 of the piezoelectric film 21 is electrically connected to the electrode pattern formed on the inner surface of the board 33 through the upper side metal coat 26A of the soft sheet 24, the electric conductors in the through holes 27, the lower side metal coat 26B of the soft sheet 24, and the lower side ring-shaped frame-like element 29 in that order. On the other hand, the upper side electrode coat 22 of the piezoelectric film 21 is electrically connected to the electrode pattern formed on the outer surface of the board 33 through the upper side ring-shaped frame-like element 28 and the casing 32 in that order. Further, in order to prevent the electrode coats 22 and 23 on the both surfaces of the piezoelectric film 21 from being short-circuited with each other through the casing 32, it is preferable that a coating of resin for electric insulation is applied on the cylindrical interior surface of the casing 32 (except for the top surface and the open end thereof).

In the piezoelectric vibration sensor constructed as discussed above, when any vibration or impulse is applied to the sensor, the vibration membrane 25 vibrates in an up-and-down or vertical direction in the figure depending upon the applied vibration or impulse. In this case, since the vibration membrane 25 is shaped into a dome-like shape, it vibrates in such manner that its upward displacement is greater than its downward displacement. As a result, a large potential difference occurs in the piezoelectric film 21, and the piezoelectric film 21 generates a voltage corresponding to an input acceleration. Accordingly, an input of acceleration and therefore a vibration or impulse can be detected by amplifying and electrically processing the voltage generated from the piezoelectric film 21 by the circuit elements or parts mounted on the inner surface of the board 33. For example, if the vibration sensor of the above embodiment is used in a pedometer, an up-and-down acceleration due to each step in walking can be detected thereby, and hence the number of steps can be detected.

Further, in case the piezoelectric film 21 has not a dome-like shape, but has, for example, a flat disc-like shape unlike the above embodiment, if any vibration or impulse is applied to the sensor, the piezoelectric film 21 vibrates in an up-and-down direction in such manner that its upward displacement and downward displacement are substantially symmetric so that a potential difference occurring between the top surface side and the bottom surface side of the piezoelectric film 21 is considerably diminished. For this reason, it is preferred that the vibration membrane 25 is formed in such a shape as the piezoelectric film 21 thereof is much displaced toward one side thereof, like the dome-like shape in the embodiment, so that if any vibration or impulse is applied to the sensor, the vibration membrane 25 can vibrate asymmetrically with a large amplitude of vibration. In addition, it is preferable that the thickness of the piezoelectric film 21 is set to, for example, about 3-10 µm. If the thickness of the piezoelectric film 21 is increased, quantity of displacement (amplitude of vibration) thereof is decreased and so a voltage generated in the piezoelectric film 21 is lowered.

The piezoelectric vibration sensor constructed as mentioned above uses a piezoelectric film as a vibration measurement element or device. This piezoelectric film is much strong in a shock or impact such as falling or the like, and there is hardly possibility that a break, a crack, a fracture or the like occurs therein by a shock or impact. Accordingly, there does not occur an accident that a break, a crack, a fracture or the like occurs in the piezoelectric film by a shock or impact such as falling or the like and no voltage is generated from the piezoelectric sensor using the piezoelectric film, and hence the piezoelectric vibration sensor that has high resistant to a shock, impact or the like can be obtained. In addition, since the peripheral portion of the vibration membrane is supported, when a vibration or impulse is applied to the sensor, the vibration membrane vibrates in one direction (an up-and-down direction in the figure) much stably with large amplitude of vibration. Therefore, a stable and large output voltage can be obtained therefrom, and hence an acceleration (vibration) applied to the sensor can be measured stably with high accuracy. Moreover, no accident occurs that the vibration membrane is deformed, changes its shape, is broken, is cracked, etc., by a shock or impact such as falling of the sensor or the like.

Japanese Unexamined Patent Application Publication No. 2003-215153 (P2003-215153A) that was published on July 30, 2003, discloses an acceleration sensor constructed such that a base element curved in a circular arc shape and a piezoelectric element curved in a circular arc shape are joined together to form a circular arc-shaped laminate, a weight is mounted to one end of the laminate, a support member is provided on the other end of the laminate, and the support member is secured to a board. In this acceleration sensor, only one end of the circular arc-shaped laminate is fixed, and when a vibration or impulse is applied to the sensor, the circular arc-shaped laminate vibrates unstably. Accordingly, there is a disadvantage that an acceleration (vibration) applied to the sensor cannot be measured stably with high accuracy. In addition, there can be easy to occur an accident that the circular arc-shaped laminate is deformed, changes its shape, is broken, is cracked, etc., by a shock or impact such as falling of the sensor or the like.

Further, there has been provided a capacitive vibration sensor that uses an electret as a vibration measurement element or device and measures a vibration (input acceleration) due to a change in capacitance. However, the electret is weak in water (is not water-resistant) and it is necessary to make a vibration sensor using an electret a waterproof structure. On the contrary, the vibration sensor of the above embodiment uses a piezoelectric film as a vibration measurement element. The piezoelectric film is water-resistant, and there is also obtained an advantage that it is unnecessary to make the vibration sensor a waterproof structure.

In the above embodiment, the metal coats 26A and 26B are formed on the both surfaces of the soft sheet 24 over the entire surfaces thereof, respectively. The metal coats 26A and 26B are formed to electrically connect the lower side electrode coat 23 of the piezoelectric film 21 to the electrode pattern formed on the board 33. Therefore, they may be formed, for example, only on the both surfaces of the peripheral portion of the soft sheet 24, which is nipped by the ring-shaped frame-like elements 28 and 29.

In addition, the piezoelectric film 21 is positioned at the upper side or exterior side of the vibration membrane 25 that is curved in a dome-like shape and the soft sheet 24 is positioned at the lower side or interior side thereof. However, it is needless to say that the piezoelectric film 21 may be positioned at the lower side or interior side of the vibration membrane 25 that is curved in a dome-like shape, the soft sheet 24 may be positioned at the upper side or exterior side thereof, and the weight 31 may be mounted on the exterior surface of the soft sheet 24, and that the same function and effects as those in the first embodiment can be obtained.

Next, a second embodiment of the present invention will be described in detail with reference to Fig. 3.

This second embodiment merely differs mainly in the point that a vibration membrane 25 constituted by a piezoelectric film 21 and a soft sheet 24 integrated with the piezoelectric film 21 in one body is not shaped in a dome-like shape, in other words, in the point that the vibration membrane 25 is formed in a circular disc shape both surfaces of which are flat. Accordingly, in Fig. 3, elements and portions corresponding to those in Figs. 1 and 2 will be denoted by the same reference numbers or characters attached thereto, and explanation thereof will be omitted unless necessary.

In the second embodiment, a plurality of, for example, three pins 35 (only two pins are seen in Fig. 3) are formed on the inner surface of a disc-shaped board 33 at positions thereof on which a lower side ring-shaped frame-like element 29 does not abut. The pins 35 protrude inwardly in a direction substantially perpendicular to the inner surface of the disc-shaped board 33, and have the same length that is higher than the height of the lower side ring-shaped frame-like element 29. These pins 35 are formed on the inner surface of the board 33 in such manner that they are located on the circumference of a circle the center of which is the same as that of the vibration membrane 25 at equal angular intervals (at angular intervals of 120° in this embodiment).

In the above-stated construction, one ring-shaped frame-like element 28 is inserted into a casing 32 the bottom of which is open, and subsequently thereto, the vibration membrane 25 to which a weight 31 has been mounted and the both surfaces of which are flat, the other ring-shaped frame-like element 29, and the disc-shaped board 33 are inserted into the casing 32 in that order, and thereafter, the open end (bottom) of the casing 32 are bent inwardly, pressed down and clinched on the disc-shaped board 33 so that the board 33 is secured to the casing 32. As a result, the peripheral portion of the vibration membrane 25 is strongly nipped and supported by the bottom surface of the upper side ring-shaped frame-like element 28 and the top surface of the lower side ring-shaped frame-like element 29 as well as three portions of the vibration membrane 25 that lie toward the center apart from the peripheral portion thereof are pressed and pushed up by the three pins 35 formed on the inner surface of the board 33. Consequently, the vibration membrane 25 has substantially a dome-like shape as shown in Fig. 3 and is supported in the casing 32. Thus, it is apparent that the same function and effects as those in the first embodiment can be also obtained in this second embodiment, and explanation thereof will be omitted.

Further, in the above second embodiment, too, at least one FET 34 and required circuit elements and/or parts not shown are mounted on the inner surface of the board 33, and in addition thereto, a required electrode pattern is formed on each of the inner surface and the outer surface of the board 33.

Furthermore, the piezoelectric film 21 is positioned at the upper side or exterior side of the vibration membrane 25 that is curved in a dome-like shape and the soft sheet 24 is positioned at the lower side or interior side thereof. I is needless to say that the piezoelectric film 21 may be positioned at the lower side or interior side of the vibration membrane 25 that is curved in a dome-like shape, the soft sheet 24 may be positioned at the upper side or exterior side thereof, and the weight 31 may be mounted on the exterior surface of the soft sheet 24, and that the same function and effects as those in the second embodiment can be obtained.

In the second embodiment, though the three pins 35 are formed on the inner surface of the board 33, the number of the pins 35 is not limited to three. In addition, the height of each pin 35 is set to a predetermined height in consideration of measurement sensitivity and the like.

While the present invention has been described with regard to the preferred embodiments shown by way of example, it will be apparent to those skilled in the art that various modifications, alterations, changes, and/or minor improvements of the embodiments described above can be made without departing from the spirit and the scope of the present invention. Accordingly, it should be understood that the present invention is not limited to the illustrated embodiments, and is intended to encompass all such modifications, alterations, changes, and/or minor improvements falling within the scope of the invention defined by the appended claims.

## Claims

1. A piezoelectric vibration sensor comprising:
a vibration membrane that consists of a laminate constituted by a soft sheet and a piezoelectric film on both surfaces of which electrode coats are formed;
a frame-like element that supports the peripheral portion of said vibration membrane; and
a weight that is mounted on about the central portion of one surface of the portion of the vibration membrane that is not supported by the frame-like element, and wherein
said vibration membrane is formed such that the portion thereof which is not supported by the frame-like element is displaced from the peripheral portion thereof.

2. The piezoelectric vibration sensor as set forth in claim 1, wherein
electric conductor coats are formed on both surfaces of the soft sheet, respectively;
the portion of the vibration membrane that is not supported by the frame-like element is formed in about a dome-like shape; and
a pair of frame-like elements is provided to support the peripheral portion of the vibration membrane on each side by one frame-like element.

3. The piezoelectric vibration sensor as set forth in claim 1 or 2, further including:
a casing one end of which is open; and
a board that closes the open end of the casing, and wherein
the peripheral portion of the vibration membrane is supported by the frame-like element or elements by accommodating in the casing the frame-like element or elements and the vibration membrane on which the weight has been mounted and closing the open end of the casing by the board.

4. A piezoelectric vibration sensor comprising:
a vibration membrane that consists of a laminate constituted by a soft sheet and a piezoelectric film on both surfaces of which electrode coats are formed;
a frame-like element that supports the peripheral portion of said vibration membrane;
a weight that is mounted on about the central portion of one surface of the portion of the vibration membrane that is not supported by the frame-like element;
a casing one end of which is open;
a board that closes the open end of the casing; and
a plurality of pins that are formed on and protrude from the inner surface of the board, and wherein
the peripheral portion of the vibration membrane is supported by the frame-like element by accommodating in the casing the frame-like element and the vibration membrane on which the weight has been mounted and closing the open end of the casing by the board as well as the portion of the vibration membrane that is not supported by the frame-like element is pressed by the plurality of pins on the inner surface of the board so that it is displaced from the peripheral portion thereof and supported in the displaced shape.

5. The piezoelectric vibration sensor as set forth in claim 4, wherein
electric conductor coats are formed on both surfaces of the soft sheet, respectively;
the portion of the vibration membrane which is not supported by the frame-like element is formed in about a dome-like shape; and
a pair of frame-like elements is provided to support the peripheral portion of the vibration membrane on each side by one frame-like element.
